# EUROPÄISCHE PATENTANMELDUNG

(11) **EP 4 734 338 A1**
(43) Veröffentlichungstag der Anmeldung: **29.04.2026**
(21) Anmeldenummer: 24208821.9
(22) Anmeldetag: 25.10.2024
(51) Int. Cl.: H02K 9/06, H02K 5/20

(54) **ELEKTROMOTOR MIT LÜFTER**

(71) Anmelder: maxon international ag, 6072 Sachseln (CH)
(72) Erfinder: Trachsel, Mathis, 6006 Luzern (CH); Kreher, Johannes, 6078 Lungern (CH)
(74) Vertreter: Grünecker Patent- und Rechtsanwälte PartG mbB

(57) **Zusammenfassung**

Die vorliegende Erfindung betrifft einen Elektromotor mit einem Rotor, einem Stator und einem Lüfter, wobei der Lüfter drehfest mit einer Rotorwelle des Rotors verbunden ist und sich in axialer Richtung einer Achse der Rotorwelle an ein Motorgehäuse anschließt, wobei der Lüfter eine Lüfterscheibe aufweist, die sich in radialer Richtung zu der Achse erstreckt und an der auf der dem Motorgehäuse zugewandten Seite mehrere in Bezug auf die Achse nach außen laufende Flügel angeordnet sind, wobei das Motorgehäuse Öffnungen zu dem Lüfter hin aufweist und ein erster Luftstrom durch eine Drehung des Lüfters aus dem Motorgehäuse durch die Öffnungen und dann in radialer Richtung in Bezug auf die Achse nach Außen entlang der Lüfterscheibe und zwischen den Flügeln erzeugbar ist. Erfindungsgemäß ist vorgesehen, dass der Lüfter derart ausgebildet ist, dass durch die Drehung des Lüfters ein Beschleunigungsluftstrom für den ersten Luftstrom von der dem Motorgehäuse abgewandten Seite der Lüfterscheibe, durch die Lüfterscheibe und dann in radialer Richtung in Bezug auf die Achse nach Außen entlang der Lüfterscheibe und zwischen den Flügeln erzeugbar ist.

## Beschreibung

Die vorliegende Erfindung bezieht sich auf einen Elektromotor gemäß dem Oberbegriff des Anspruchs 1.

Ein gattungsgemäßer Elektromotor umfasst einen Rotor, einen Stator und einen Lüfter, wobei der Lüfter drehfest mit einer Rotorwelle des Rotors verbunden ist und sich in axialer Richtung einer Achse der Rotorwelle an ein Motorgehäuse anschließt, wobei der Lüfter eine Lüfterscheibe aufweist, die sich in radialer Richtung zu der Achse erstreckt und an der auf der dem Motorgehäuse zugewandten Seite mehrere in Bezug auf die Achse nach außen laufende Flügel angeordnet sind, wobei das Motorgehäuse Öffnungen zu dem Lüfter hin aufweist und ein erster Luftstrom durch eine Drehung des Lüfters aus dem Motorgehäuse durch die Öffnungen und dann in radialer Richtung in Bezug auf die Achse nach Außen entlang der Lüfterscheibe und zwischen den Flügeln erzeugbar ist.

Ein gattungsgemäßer Elektromotor ist beispielsweise aus der US 10,516,319 B2 bekannt. Dieser weißt neben dem ersten Luftstrom, der zur Kühlung eines bürstenlosen Generators verwendet wird, einen geringen Leckluftstrom auf, der von der dem Rotor abgewandten Seite der Lüfterscheibe durch einen Spalt zwischen einer Fläche der Lüfterscheibe und einer Fläche des Motorgehäuses zu der dem Rotor zugewandten Seite der Lüfterscheibe fließt, die zwei Flächen dabei kühlt und den ersten Luftstrom auf der dem Rotor zugewandten Seite der Lüfterscheibe nicht beeinflusst.

Generell kann durch den ersten Luftstrom der Rotor und/oder der Stator gekühlt werden. Dies ist insbesondere bei hohen Drehzahlen wichtig, um ein erhöhtes Drehmoment erzeugen zu können. Entsprechend ist eine verbesserte Kühlleistung bei gattungsgemäßen Elektromotoren erstrebenswert.

Die Aufgabe der vorliegenden Erfindung besteht daher darin, ein Elektromotor bereitzustellen, der eine verbesserte Kühlleistung, insbesondere bei hohen Drehzahlen, ermöglicht.

Die Aufgabe wird durch die Merkmale des unabhängigen Anspruchs 1 gelöst. Demnach liegt eine erfindungsgemäße Lösung der Aufgabe vor, wenn der Lüfter derart ausgebildet ist, dass durch die Drehung des Lüfters ein Beschleunigungsluftstrom für den ersten Luftstrom von der dem Motorgehäuse abgewandten Seite der Lüfterscheibe, durch die Lüfterscheibe und dann in radialer Richtung in Bezug auf die Achse nach Außen entlang der Lüfterscheibe und zwischen den Flügeln erzeugbar ist.

Durch die erfindungsgemäße Lösung kann die Kühlleistung des ersten Luftstroms, insbesondere bei hohen Drehzahlen, verbessert werden. Durch den Beschleunigungsluftstrom wird der erste Luftstrom in radialer Richtung der Lüfterscheibe in Bezug auf die Achse nach außen mitgezogen, wodurch sich der gesamte erste Luftstrom auch innerhalb des Motorgehäuse beschleunigt. Der beschleunigte erste Luftstrom ermöglich wiederrum eine bessere Kühlung des Rotors und/oder des Stators. Da der Lüfter drehfest mit Rotorwelle verbunden ist und der Beschleunigungsluftstrom sowie der erste Luftstrom beide durch die Drehung des Lüfters erzeugt werden, nimmt deren Volumenstrom auch mit der Drehzahl des Rotors zu, sodass bei einer höheren Drehzahl eine höhere Kühlleistung erbracht wird und der Elektromotor bei hohen Drehzahlen mehr Drehmoment erzeugen kann. Das Motorgehäuse kann bei einem Außenläufermotor Teil des Rotors oder bei einem Innenläufermotor Teil des Stators sein. Bei einem Außenläufermotor ist das Motorgehäuse drehfest mit dem Lüfter verbunden und dreht sich mit diesem mit.

In radialer Richtung bedeutet erfindungsgemäß, dass der jeweilige in radialer Richtung fließende Luftstrom in Bezug auf die Achse nach außen entlang der Lüfterscheibe und zwischen den Flügeln bewegt. Durch die Drehung und Anordnung der Flügel kann der jeweilige in radialer Richtung fließende Luftstrom dabei auch eine gewisse Strömungskomponente in Umfangsrichtung um die Achse aufweisen. Weiter kann der jeweilige in radialer Richtung fließende Luftstrom auch eine geringe axiale Strömungskomponente aufweisen, wenn beispielsweise eine dem Motorgehäuse zugewandte Fläche der Lüfterscheibe nach außen von der Achse in axialer Richtung eine Neigung aufweist und der jeweilige in radialer Richtung fließende Luftstrom entlang dieser Neigung fließt.

Vorteilhafte Ausgestaltungen der vorliegenden Erfindung sind Gegenstand der Unteransprüche.

In einer bevorzugten Ausführungsform der vorliegenden Erfindung beträgt ein Verhältnis eines Volumenstroms des Beschleunigungsluftstroms und eines Volumenstroms des ersten Luftstroms mindestens 1:10, vorzugsweise mindestens 1:5. Der Volumenstrom des Beschleunigungsluftstrom beträgt also mindestens 10 %, insbesondere mindestens 20 % des Volumenstroms des ersten Luftstroms. Durch dieses Verhältnis wird eine vorteilhafte Beschleunigungswirkung des Beschleunigungsluftstroms auf den ersten Luftstrom erreicht.

In einer weiteren bevorzugten Ausführungsform der vorliegenden Erfindung ist der Beschleunigungsluftstrom durch mehrere Durchlasskanäle erzeugbar, die jeweils eine Eingangsöffnung auf der dem Motorgehäuse abgewandten Seite der Lüfterscheibe und eine Ausgangöffnung auf der dem Motorgehäuse zugewandten Seite der Lüfterscheibe aufweisen, wobei die jeweilige Ausgangsöffnung und ein sich an die Ausgangsöffnung anschließender Abschnitt des jeweiligen Durchlasskanals derart ausgerichtet sind, dass ein die jeweilige Ausgangsöffnung passierender Anteil des Beschleunigungsluftroms die jeweilige Ausgangsöffnung in radialer Richtung in Bezug auf die Achse nach Außen entlang der Lüfterscheibe und zwischen den Flügeln verlässt. Der Beschleunigungsluftstrom wird hierbei durch die Summe der die jeweilige Ausgangsöffnung passierender Anteile des Beschleunigungsluftroms gebildet. Mittels der Durchlasskanäle kann eine gezielte Ausrichtung des Beschleunigungsluftstroms erzeugt werden. Eine jeweilige Normale der jeweiligen Ausgangsöffnung kann senkrecht zu der Achse stehen. Weiter ist die jeweilige Eingangsöffnung besonders bevorzugt in axialer Richtung geöffnet.

Vorzugsweise verengen sich die Durchlasskanäle von der Eingangsöffnung zu der Ausgangsöffnung, sodass eine Beschleunigung der Luft in den Durchlasskanälen erfolgt. Der sich einstellende Venturi-Effekt, also ein Unterdruck im Bereich der Verengung der Durchlasskanäle zur Ausgangsöffnung hin und eine dadurch resultierende Beschleunigung des Beschleunigungsluftstroms durch die Durchlasskanäle sowie eine erhöhte Strömungsgeschwindigkeit in Radialrichtung aus der Ausgangsöffnung, erzeugt eine axiale Beschleunigung des ersten Luftstroms, sodass dieser ab dem Ort des Zusammentreffens mit dem Beschleunigungsluftstrom mit einer höheren Geschwindigkeit zusammen mit dem Beschleunigungsluftstrom in radialer Richtung geführt wird. Der Querschnitt der Eingangsöffnung der Durchlasskanäle wird so eingestellt, dass über den entstehenden Unterdruck genügend Luft insbesondere durch den erhitzten Stator nachgezogen wird und eine optimal Kühlleistung bei minimalen Reibungsverlusten erzielt wird.

Weiter vorzugsweise weisen die Durchlasskanäle eine gemeinsame Eingangsöffnung auf. Diese vereinfacht den Aufbau des Lüfters.

In einer weiteren bevorzugten Ausführungsform beträgt ein Verhältnis eines maximalen radialen Abstands der Ausgangsöffnungen von der Achse der Rotorwelle, wobei die Ausgangsöffnungen vorzugsweise alle den gleichen radialen Abstand von der Achse der Rotorwelle aufweisen, und einer maximalen radialen Ausdehnung der Flügel von der Achse der Rotorwelle maximal 1:2, vorzugsweise, maximal 1:3, beträgt. Dadurch sind die Ausgangsöffnungen nahe am Zentrum des Lüfters platziert und eine Strecke in radialer Richtung, über die der Beschleunigungsluftstrom auf den ersten Luftstrom wirkt, ist entsprechend größer.

Gemäß einer bevorzugten Ausführungsform ist die jeweilige Ausgangsöffnung von zwei Flügeln in Umfangsrichtung in Bezug auf die Achse der Rotorwelle begrenzt. Dadurch fließt der die jeweilige Ausgangsöffnung passierender Anteil des Beschleunigungsluftroms über den gesamten Abstand zwischen die zwei Flügeln und sorgt für eine Beschleunigung des jeweiligen Anteils des ersten Luftstroms. Vorzugsweise ist zwischen den zwei Flügeln zumindest ein, weiter vorzugsweise zwei Flügel in radialer Richtung zu der Achse von der jeweiligen Ausgangsöffnung beabstandet angeordnet. Diese verkürzten Flügel sorgen für einen zusätzlichen Luftstromantrieb, ohne dass die Ausgangsöffnung selbst für einen zu hohen Strömungswiderstand sorgt.

In einer weiteren bevorzugten Ausführungsform sind die Ausgangsöffnungen derart angeordnet, dass der Beschleunigungsluftstrom im Wesentlichen über 360° von der Achse in radialer Richtung erzeugbar ist. Dadurch wirkt der Beschleunigungsluftstrom großflächig auf den ersten Luftstrom. Im Wesentlichen bedeutet hierbei, dass der Beschleunigungsluftstrom entlang der gesamten Lüfterscheibe außer an den Positionen der Flügel fließt.

In einer weiteren bevorzugten Ausführungsform sind die Flügel rechteckig ausgeführt, gerade und/oder in radialer Richtung zu der Achse angeordnet. Hierdurch kann eine gleiche Kühlleistung unabhängig von der Drehrichtung erreicht werden. Alternativ können in einer weiteren bevorzugten Ausführungsform die Flügel gekrümmt ausgeführt sein, wodurch eine gesteigerte Kühlleistung in einer bevorzugten Drehrichtung erreicht wird.

Gemäß einer bevorzugten Ausführungsform weist der Lüfter eine ungerade Anzahl von Flügeln auf, wobei der Lüfter vorzugsweise mehr als 9, weiter vorzugsweise mehr als 15 und besonders bevorzugt 21 Flügel aufweist.

In einer besonders bevorzugten Ausführungsform der vorliegenden Erfindung ist der Elektromotor ein elektronisch kommutierter Außenläufermotor, wobei das Motorgehäuse Teil des Rotors ist und ein Rotorgehäuse darstellt und zumindest eine dem Lüfter zugewandte axiale Stirnseite ausbildet, wobei die dem Lüfter zugewandte axiale Stirnseite mehrere Speichen aufweist und Zwischenräume zwischen den Speichen die Öffnungen des Motorgehäuses ausbilden. Insbesondere ist das Rotorgehäuse als glockenförmiges Rotorgehäuse ausgeführt, an dem permanentmagnetische Rotormagnete angebracht sind. Dadurch können die Öffnungen auf einfache bauliche Weise ausgebildet werden und die Kühlung derartiger Elektromotoren kann hierdurch verbessert werden.

Vorzugsweise sind die Speichen asymmetrisch um die Achse angeordnet indem zumindest zwei Winkel, welche benachbarte Speichen zueinander bilden, ungleich groß ausgeführt sind und wobei der Schwerpunkt des Rotorgehäuses auf der Achse liegt. Bei einem Rotorgehäuse mit asymmetrisch angeordneten Speichen entsteht gegenüber den symmetrisch angeordneten Flügeln eine teilweise asymmetrische Überlagerung. Diese asymmetrische Überlagerung von Speichen und Flügeln führt abhängig von der Ausrichtung der Speichen gegenüber den Flügeln zu unterschiedlichen Lüfterleistungen. Um bei einer grossen Anzahl von Motoren die Lüfterleistung möglichst konstant zu halten, müsste bei der Montage die Lüfterscheibe gegenüber dem Rotorgehäuse exakt ausgerichtet werden. Das exakte Ausrichten verursacht jedoch hohe Kosten. Zum einen durch das präzis ausgerichtete Aufstecken der Lüfterscheibe auf die Rotorwelle, zum anderen müssen an der Lüfterscheibe und an der Rotorwelle deutliche Prägungen angebracht werden. Mit dem vorliegenden Design wird unabhängig von der Ausrichtung der Lüfterscheibe gegenüber der Rotorwelle und damit der Flügel gegenüber den Speichen, ein nahezu konstanter erster Luftstrom erzeugt. Das Volumen des ersten Luftstroms verändert sich abhängig von der Ausrichtung zwischen Lüfterscheibe und Rotorgehäuse lediglich um ca. 2-3%. Die Konstanz des ersten Luftstroms ermöglicht eine genauere Spezifikation insbesondere der Leistungsgrenze der Motoren. Somit ist der Volumenstrom des ersten Luftstroms weniger abhängig von der Position der Flügel und der Lüfter muss bei der Montage nicht auf die Speichen ausgerichtet werden. Weiter bevorzugt weist das Rotorgehäuse eine Anzahl von mindestens 3 bis maximal 11 Speichen auf, insbesondere bevorzugt eine Anzahl von 5 oder 7 Speichen. Auch damit ist der Volumenstrom des ersten Luftstroms nicht oder nur geringfügig abhängig von der Position der Flügel zu den Speichen.

Gemäß einer bevorzugten Ausführungsform ist der Lüfter auf ein Wellenende der Rotorwelle aufgesetzt und befestigt, wobei der Lüfter vorzugsweise mittels eines Presssitzes befestigt ist. Dadurch ergibt sich ein einfacher Aufbau des Elektromotors.

In einer weiteren bevorzugten Ausführungsform weist eine dem Motorgehäuse zugewandte Fläche der Lüfterscheibe zwischen den Flügeln nach außen von der Achse in axialer Richtung eine Neigung von dem Motorgehäuse weg auf. Dadurch kann der Luftstrom entlang der Lüfterscheibe zusätzliche beschleunigt werden.

Vorzugsweise ist die Neigung durch eine Abnahme einer axialen Dicke der Lüfterscheibe zumindest ab dem maximalen radialen Abstand der Ausgangsöffnungen in radialer Richtung ausgebildet. Dadurch kann die Neigung auf einfach Weise ausgebildet werden. Weiter vorzugsweise beträgt ein Maximum der axialen Dicke der Lüfterscheibe mehr als das doppelte des Minimums der axialen Dicke der Lüfterscheibe. Dies ergibt eine geeignete Neigung.

Nachfolgend wird ein Ausführungsbeispiel eines erfindungsgemäßen Elektromotors anhand von Zeichnungen näher erläutert.

In den Zeichnungen zeigen:
- Figur 1a, b, c:: einen schematischen axialen Längsschnitt durch ein Ausführungsbeispiel eines erfindungsgemäßen Elektromotors mit eingezeichnetem ersten Luftstrom, mit eingezeichnetem Beschleunigungsluftstrom und mit eingezeichnetem ersten Luftstrom und Beschleunigungsluftstrom,
- Figur 2a:: einen axialen Längsschnitt durch den Lüfter des Ausführungsbeispiels des erfindungsgemäßen Elektromotors,
- Figur 2b:: eine schräge Draufsicht auf die dem Motorgehäuse zugewandte Seite des Lüfters des Ausführungsbeispiels des erfindungsgemäßen Elektromotors,
- Figur 2c:: eine schräge Draufsicht auf die dem Motorgehäuse abgewandte Seite des Lüfters des Ausführungsbeispiels des erfindungsgemäßen Elektromotors,
- Figur 2d:: eine Frontalansicht auf die dem Motorgehäuse zugewandte Seite des Lüfters des Ausführungsbeispiels des erfindungsgemäßen Elektromotors, und
- Fig. 3: eine Schrägansicht auf ein als Rotorgehäuse ausgeführtes Motorgehäuse eines Rotors des Ausführungsbeispiels des erfindungsgemäßen Elektromotors.

In den folgenden Abbildungen sind gleiche Teile mit gleichen Bezugszeichen versehen. Sofern eine Figur Bezugszeichen enthält, auf die in der zugehörigen Figurenbeschreibung nicht explizit eingegangen wird, wird auf vorherige oder nachfolgende Figurenbeschreibungen verwiesen.

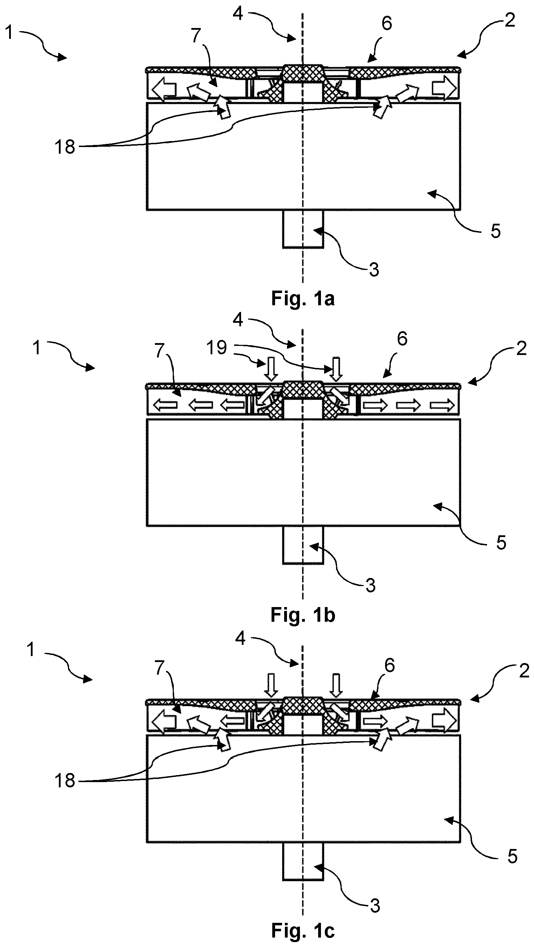

Die Figuren 1a, b und c zeigen jeweils einen schematischen axialen Längsschnitt durch ein Ausführungsbeispiel eines erfindungsgemäßen Elektromotors 1. Der Elektromotor 1 umfasst einen Rotor, einen Stator und einen Lüfter 2, wobei der Lüfter 2 drehfest mit einer Rotorwelle 3 des Rotors verbunden ist und sich in axialer Richtung einer Achse 4 der Rotorwelle 3 an ein Motorgehäuse 5, das Teil des Rotors oder des Stators sein kann, anschließt. Rotor und Stator sind hier nicht dargestellt. Das Motorgehäuse (5) ist nur schematisch dargestellt. Gemäß dem gezeigten Ausführungsbeispiel ist der Lüfter 2 auf ein Wellenende der Rotorwelle 3 aufgesetzt und befestigt, wobei der Lüfter 2 beispielsweise mittels eines Presssitzes befestigt ist. Der Lüfter 2 weist eine Lüfterscheibe 6 auf, die sich in radialer Richtung zu der Achse 4 erstreckt und an der auf der dem Motorgehäuse 5 zugewandten Seite mehrere in Bezug auf die Achse 4 nach außen laufende Flügel 7 angeordnet sind. Das Motorgehäuse 5 weist Öffnungen 8, die nicht in Figur 1 gezeigt sind, zu dem Lüfter 2 hin auf. In Figur 1a wird ein erster Luftstrom (18) schematisch gezeigt, der durch eine Drehung des Lüfters 2 aus dem Motorgehäuse 5 durch die Öffnungen 8 und dann in radialer Richtung in Bezug auf die Achse 4 nach Außen entlang der Lüfterscheibe 6 und zwischen den Flügeln 7 erzeugbar ist. Im Motorgehäuse 5 kühlt der erste Luftstrom (18) den Stator und/oder den Rotor, indem er an diesen entlang fließt. Erfindungsgemäß ist der Lüfter 2 derart ausgebildet ist, dass durch die Drehung des Lüfters 2 ein Beschleunigungsluftstrom (19) für den ersten Luftstrom (18) von der dem Motorgehäuse 5 abgewandten Seite der Lüfterscheibe 6, durch die Lüfterscheibe 6 und dann in radialer Richtung in Bezug auf die Achse 4 nach Außen entlang der Lüfterscheibe 6 und zwischen den Flügeln 7 erzeugbar ist. Dieser Beschleunigungsluftstrom (19) ist in Figur 1b alleine gezeigt. Indem der Beschleunigungsluftstrom (19) in radialer Richtung auf den ersten Luftstrom (18) trifft, wie dies in Figur 1c gezeigt ist, und diesen mitzieht, wird auch der erste Luftstrom beschleunigt und damit dessen Geschwindigkeit auch innerhalb des Motorgehäuses 5 erhöht. Dadurch kann die Kühlleistung des ersten Luftstroms im Motorgehäuse 5 erhöht werden.

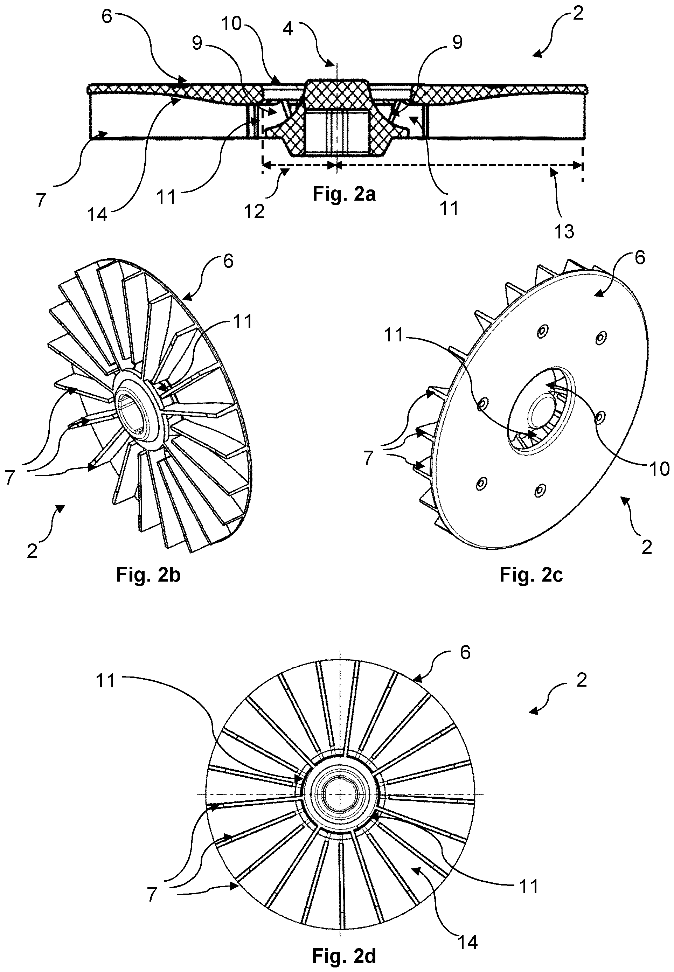

Die Figuren 2a, b, c und d zeigen ein Ausführungsbeispiel eines Lüfters 2 für das Ausführungsbeispiel eines erfindungsgemäßen Elektromotors 1 aus unterschiedlichen Ansichten. Der Lüfter 2 weist mehrere Durchlasskanäle 9 auf, durch die der Beschleunigungsluftstrom (19) erzeugbar ist. Die Durchlasskanäle 9 weisen jeweils eine Eingangsöffnung 10 auf der dem Motorgehäuse 5 abgewandten Seite der Lüfterscheibe 6, wobei die Durchlasskanäle 9 in dem gezeigten Ausführungsbeispiel des Lüfters 2 eine gemeinsame Eingangsöffnung 10 aufweisen, und eine Ausgangsöffnung 11 auf der dem Motorgehäuse 5 zugewandten Seite der Lüfterscheibe 6 auf. Die jeweilige Ausgangsöffnung 11 und ein sich an die Ausgangsöffnung 11 anschließender Abschnitt des jeweiligen Durchlasskanals 9 sind derart ausgerichtet, dass ein die jeweilige Ausgangsöffnung 11 passierender Anteil des Beschleunigungsluftroms die jeweilige Ausgangsöffnung 11 in radialer Richtung in Bezug auf die Achse 4 nach Außen entlang der Lüfterscheibe 6 und zwischen den Flügeln 7 verlässt. Weiter verengen sich die Durchlasskanäle 9 von der Eingangsöffnung 10 zu der Ausgangsöffnung 11, sodass eine Beschleunigung der Luft in den Durchlasskanälen 9 erfolgt. Der beschleunigte Beschleunigungsluftstrom (19) trifft damit auf den ersten Luftstrom (18).

Die Ausgangsöffnungen 9 weisen alle den gleichen radialen Abstand 12 von der Achse 4 der Rotorwelle 3 auf, wobei dieser Abstand ein Verhältnis zu der maximalen radialen Ausdehnung 13 der Flügel 7 von der Achse 4 von unter 1:3 aufweist. Jeweils zwei Flügel 7 begrenzen eine jeweilige Ausgangsöffnung 11 in Umfangsrichtung in Bezug auf die Achse 4 der Rotorwelle 3, wie dies insbesondere in Figur 2d ersichtlich ist. Zwischen diesen zwei Flügeln 7 sind zwei weitere Flügel 7 in radialer Richtung zu der Achse 4 von der jeweiligen Ausgangsöffnung beabstandet angeordnet. Die Ausgangsöffnungen 11 sind dabei derart angeordnet, dass der Beschleunigungsluftstrom (19) über 360° außer an den Positionen der Flügel von der Achse 4 in radialer Richtung erzeugbar ist. Insgesamt weist das Ausführungsbeispiel des Lüfters 2 einundzwanzig Flügel auf, wobei die Flügel rechteckig ausgeführt sind und gerade in radialer Richtung zu der Achse 4 an der Lüfterscheibe 6 angeordnet sind.

Die eine dem Motorgehäuse zugewandte Fläche 14 zwischen den Flügeln 7 der Lüfterscheibe 6 weist nach außen von der Achse 4 in axialer Richtung eine Neigung von dem Motorgehäuse 5 weg auf, wie dies insbesondere in Figur 2a gezeigt ist. Die Neigung ist durch eine Abnahme einer axialen Dicke der Lüfterscheibe 6 zumindest ab dem radialen Abstand 12 der Ausgangsöffnungen 11 in radialer Richtung ausgebildet ist, wobei ein Maximum der axialen Dicke der Lüfterscheibe 6 mehr als das doppelte des Minimums der axialen Dicke der Lüfterscheibe 6 beträgt.

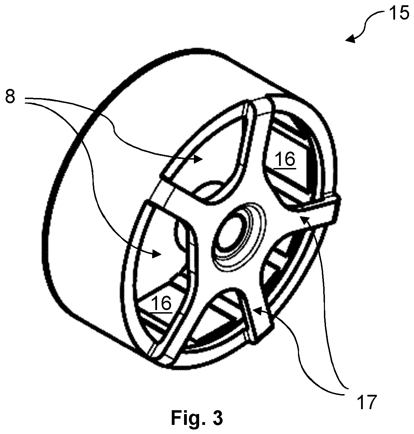

Figur 3 zeigt ein als Rotorgehäuse 15 ausgeführtes Motorgehäuse 5 des Rotors des Ausführungsbeispiels des Elektromotors 1, wobei das Ausführungsbeispiel des Elektromotors 1 ein elektronisch kommutierter Außenläufermotor ist. Der Rotor weist dabei ein glockenförmiges Rotorgehäuse 15 auf, an dem permanentmagnetische Rotormagnete 16 angebracht sind. Das Rotorgehäuse 15 bildet gemäß dem Ausführungsbeispiel zumindest eine dem Lüfter 2 zugewandte axiale Stirnseite des Motorgehäuses 5 aus, wobei die dem Lüfter 2 zugewandte axiale Stirnseite mehrere Speichen 17 aufweist und Zwischenräume zwischen den Speichen 17 die Öffnungen 8 des Motorgehäuses 5 ausbilden. Die fünf Speichen 17 sind hier asymmetrisch um die Achse 4 angeordnet indem zumindest zwei Winkel, welche benachbarte Speichen zueinander bilden beziehungsweise zwischen einander einschließen, ungleich groß ausgeführt sind und hierdurch unterschiedlich große Öffnungen 8 ausbilden. Die Speichen sind weiter derart angeordnet, so dass der Schwerpunkt des Rotorgehäuses 15 auf der Achse 4 liegt.

### Bezugszeichenliste

- 1: Elektromotor
- 2: Lüfter
- 3: Rotorwelle
- 4: Achse
- 5: Motorgehäuse
- 6: Lüfterscheibe
- 7: Flügel
- 8: Öffnung
- 9: Durchlasskanal
- 10: Eingangsöffnung
- 11: Ausgangsöffnung
- 12: radialer Abstand
- 13: maximale radiale Ausdehnung
- 14: Fläche
- 15: Rotorgehäuse
- 16: Rotormagnete
- 17: Speiche
- 18: erster Luftstrom
- 19: Beschleunigungsluftstrom

## Patentansprüche

1. Elektromotor (1) mit einem Rotor, einem Stator und einem Lüfter (2), wobei der Lüfter (2) drehfest mit einer Rotorwelle (3) des Rotors verbunden ist und sich in axialer Richtung einer Achse (4) der Rotorwelle (3) an ein Motorgehäuse (5) anschließt, wobei der Lüfter (2) eine Lüfterscheibe (6) aufweist, die sich in radialer Richtung zu der Achse (4) erstreckt und an der auf der dem Motorgehäuse (5) zugewandten Seite mehrere in Bezug auf die Achse (4) nach außen laufende Flügel (7) angeordnet sind, wobei das Motorgehäuse (5) Öffnungen (8) zu dem Lüfter (2) hin aufweist und ein erster Luftstrom (18) durch eine Drehung des Lüfters (2) aus dem Motorgehäuse (5) durch die Öffnungen (8) und dann in radialer Richtung in Bezug auf die Achse (4) nach Außen entlang der Lüfterscheibe (6) und zwischen den Flügeln (7) erzeugbar ist, **dadurch gekennzeichnet, dass** der Lüfter (2) derart ausgebildet ist, dass durch die Drehung des Lüfters (2) ein Beschleunigungsluftstrom (19) für den ersten Luftstrom (18) von der dem Motorgehäuse (5) abgewandten Seite der Lüfterscheibe (6), durch die Lüfterscheibe (6) und dann in radialer Richtung in Bezug auf die Achse (4) nach Außen entlang der Lüfterscheibe (6) und zwischen den Flügeln (7) erzeugbar ist.

2. Elektromotor (1) nach Anspruch 1, **dadurch gekennzeichnet, dass** ein Verhältnis eines Volumenstroms des Beschleunigungsluftstroms (19) und eines Volumenstroms des ersten Luftstroms (18) mindestens 1:10, vorzugsweise mindestens 1:5, beträgt.

3. Elektromotor (1) nach Anspruch 1 oder 2, **dadurch gekennzeichnet, dass** der Beschleunigungsluftstrom (19) durch mehrere Durchlasskanäle (9) erzeugbar ist, die jeweils eine Eingangsöffnung (10) auf der dem Motorgehäuse (5) abgewandten Seite der Lüfterscheibe (6) und eine Ausgangsöffnung (11) auf der dem Motorgehäuse (5) zugewandten Seite der Lüfterscheibe (6) aufweisen, wobei die jeweilige Ausgangsöffnung (11) und ein sich an die Ausgangsöffnung (11) anschließender Abschnitt des jeweiligen Durchlasskanals (9) derart ausgerichtet sind, dass ein die jeweilige Ausgangsöffnung (11) passierender Anteil des Beschleunigungsluftroms (19) die jeweilige Ausgangsöffnung (11) in radialer Richtung in Bezug auf die Achse (4) nach Außen entlang der Lüfterscheibe (6) und zwischen den Flügeln (7) verlässt, wobei eine jeweilige Normale der jeweiligen Ausgangsöffnung (11) vorzugsweise senkrecht zu der Achse (4) steht.

4. Elektromotor (1) nach Anspruch 3, **dadurch gekennzeichnet, dass** sich die Durchlasskanäle von der Eingangsöffnung (10) zu der Ausgangsöffnung (11) verengen, sodass eine Beschleunigung der Luft in den Durchlasskanälen erfolgt.

5. Elektromotor (1) nach Anspruch 3 oder 4, **dadurch gekennzeichnet, dass** die Durchlasskanäle eine gemeinsame Eingangsöffnung (10) aufweisen.

6. Elektromotor (1) nach einem der Ansprüche 3 bis 5, **dadurch gekennzeichnet, dass** ein Verhältnis eines maximalen radialen Abstands (12) der Ausgangsöffnungen (11) von der Achse (4) der Rotorwelle (3), wobei die Ausgangsöffnungen (11) vorzugsweise alle den gleichen radialen Abstand (12) von der Achse (4) der Rotorwelle (3) aufweisen, und einer maximalen radialen Ausdehnung (13) der Flügel (7) von der Achse (4) der Rotorwelle (3) maximal 1:2, vorzugsweise, maximal 1:3, beträgt.

7. Elektromotor (1) nach einem der Ansprüche 3 bis 6, **dadurch gekennzeichnet, dass** die jeweilige Ausgangsöffnung (11) von zwei Flügeln (7) in Umfangsrichtung in Bezug auf die Achse (4) der Rotorwelle (3) begrenzt ist, wobei vorzugsweise zwischen den zwei Flügeln (7) zumindest ein, weiter vorzugsweise zwei Flügel (7) in radialer Richtung zu der Achse (4) von der jeweiligen Ausgangsöffnung (11) beabstandet angeordnet ist.

8. Elektromotor (1) nach Anspruch 7, **dadurch gekennzeichnet, dass** die Ausgangsöffnungen (11) derart angeordnet sind, dass der Beschleunigungsluftstrom (19) im Wesentlichen über 360° von der Achse (4) in radialer Richtung erzeugbar ist.

9. Elektromotor (1) nach einem der Ansprüche 1 bis 8, **dadurch gekennzeichnet, dass** die Flügel (7) rechteckig ausgeführt, gerade und/oder in radialer Richtung zu der Achse (4) angeordnet sind.

10. Elektromotor (1) nach einem der Ansprüche 1 bis 9, **dadurch gekennzeichnet, dass** der Lüfter (2) eine ungerade Anzahl von Flügeln (7) aufweist, wobei der Lüfter (2) vorzugsweise mehr als 9, weiter vorzugsweise mehr als 15 und besonders bevorzugt 21 Flügel (7) aufweist.

11. Elektromotor (1) nach einem der Ansprüche 1 bis 10, **dadurch gekennzeichnet, dass** der Elektromotor ein elektronisch kommutierter Außenläufermotor ist, wobei das Motorgehäuse (5) Teil des Rotors ist und ein Rotorgehäuse (15) darstellt und zumindest eine dem Lüfter (2) zugewandte axiale Stirnseite ausbildet, wobei die dem Lüfter (2) zugewandte axiale Stirnseite mehrere Speichen (17) aufweist und Zwischenräume zwischen den Speichen (17) die Öffnungen (8) des Motorgehäuses (5) ausbilden.

12. Elektromotor (1) nach Anspruch 11, **dadurch gekennzeichnet, dass** das Rotorgehäuse (15) als glockenförmiges Rotorgehäuse (15) ausgeführt ist, an dem permanentmagnetische Rotormagnete (16) angebracht sind.

13. Elektromotor (1) nach Anspruch 11 oder 12, **dadurch gekennzeichnet, dass** die Speichen (17) asymmetrisch um die Achse (4) angeordnet sind indem zumindest zwei Winkel, welche benachbarte Speichen (17) zueinander bilden, ungleich groß ausgeführt sind, wobei der Schwerpunkt des Rotorgehäuses (15) auf der Achse (4) liegt.

14. Elektromotor (1) nach Anspruch 11 bis 13, **dadurch gekennzeichnet, dass** das Rotorgehäuse (15) eine Anzahl von mindestens 3 bis maximal 11 Speichen (17), insbesondere bevorzugt eine Anzahl von 5 oder 7 Speichen (17) aufweist.

15. Elektromotor (1) nach einem der Ansprüche 1 bis 14, **dadurch gekennzeichnet, dass** der Lüfter (2) auf ein Wellenende der Rotorwelle (3) aufgesetzt und befestigt ist, wobei der Lüfter (2) vorzugsweise mittels eines Presssitzes befestigt ist.

16. Elektromotor (1) nach einem der Ansprüche 1 bis 15, **dadurch gekennzeichnet, dass** eine dem Motorgehäuse (5) zugewandte Fläche (14) der Lüfterscheibe (6) zwischen den Flügeln (7) nach außen von der Achse (4) in axialer Richtung eine Neigung von dem Motorgehäuse (5) weg aufweist.

17. Elektromotor (1) nach Anspruch 16, **dadurch gekennzeichnet, dass** die Neigung durch eine Abnahme einer axialen Dicke der Lüfterscheibe (6) zumindest ab dem maximalen radialen Abstand (12) der Ausgangsöffnungen (11) in radialer Richtung ausgebildet ist, wobei vorzugsweise ein Maximum der axialen Dicke der Lüfterscheibe (6) mehr als das doppelte des Minimums der axialen Dicke der Lüfterscheibe (6) beträgt.
